# EUROPÄISCHE PATENTANMELDUNG

(11) **EP 3 893 601 A1**
(43) Veröffentlichungstag der Anmeldung: **13.10.2021**
(21) Anmeldenummer: 21164308.5
(22) Anmeldetag: 23.03.2021
(51) Int. Cl.: H05B 6/12, A47J 27/00, A47J 36/02

(54) **KÜCHENGESCHIRR UND VERFAHREN ZUR HERSTELLUNG EINES KÜCHENGESCHIRRS UND KÜCHENGESCHIRRERZEUGNIS**

(30) Priorität: 06.04.2020 DE 102020109490
(71) Anmelder: Miele & Cie. KG, 33332 Gütersloh (DE)
(72) Erfinder: Müller, Christoph, 32289 Rödinghausen (DE); Gehring, Nils Marius, 33739 Bielefeld (DE)

(57) **Zusammenfassung**

Die Erfindung betrifft ein Küchengeschirr (1) mit einem Bodenkörper (12) mit einer Bodenfläche (13), welche ausgebildet ist, auf einem Untergrund aufgesetzt zu werden, und mit wenigstens einem Induktionselement (15), welches ausgebildet ist, wenigstens mittels induktiver Kopplung elektrische Energie zu erhalten. Das Küchengeschirr (1) ist dadurch gekennzeichnet, dass das Induktionselement (15) gegenüber der Bodenfläche (13) des Bodenkörpers (12) flächig elektrisch isoliert ist.

## Beschreibung

Die Erfindung betrifft ein Küchengeschirr gemäß dem Oberbegriff des Patentanspruchs 1. Die Erfindung betrifft weiterhin ein Verfahren zur Herstellung eines Küchengeschirrs gemäß dem Oberbegriff des Patentanspruchs 12 und ein Küchengeschirrerzeugnis gemäß dem Oberbegriff des Patentanspruchs 16.

Der Trend beim heimischen Kochen geht immer weiter dahin, die Durchführung der Kochprozesse für den Benutzer einfacher, komfortabler und bzw. oder sicherer hinsichtlich des gewünschten Kochergebnisses zu gestalten. Hierzu ist es seit längerem bekannt, Temperatursensoren im Kochfeld zu verwenden, um insbesondere für jede Kochstelle eine Restwärme nach einem durchgeführten Garprozess dort ermitteln und dem Benutzer als Warnung anzeigen zu können.

Ein Garprozess bzw. ein Kochprozess kann auch dadurch unterstützt werden, dass dem Benutzer vollständige Automatikprogramme bzw. Assistenzfunktionen zur Verfügung gestellt werden, welche dem Benutzer einen Teil der Durchführung oder sogar die vollständige Durchführung des Kochprozesses abnehmen sollen. Auch kann ein Kochprozess z.B. von dem Kochfeld und bzw. oder von einem Mobilgerät unterstützt werden, indem dort der Kochprozess verfolgt, dem Benutzer dargestellt sowie die nächsten Handlungen im Rezeptablauf angezeigt bzw. entsprechende Anweisungen an den Benutzer gegeben werden.

Auch sollen die Kochfelder optisch immer weiter aus der Küche verschwinden. Hierzu gehört es auch, die Bedienelemente der Kochfelder immer unauffälliger zu gestalten oder vollständig verschwinden zu lassen. Dies kann dazu führen, die Bedienelemente sowie die Anzeigeelemente der Kochfelder auf die Kochgeschirre zu verlagern. Daher kann es erforderlich oder zumindest wünschenswert sein, dass Informationen zwischen dem Kochgeschirr und dem Kochfeld ausgetauscht werden können. Dies kann die Übermittlung von Anweisungen sowie von Messgrößen enthalten.

Die DE 10 2008 051 265 A1 betrifft ein Gargerät, insbesondere einen Schnellkochtopf, mit einer Steuerungs-, Regelungs- und Bedienvorrichtung mit zumindest einer Sensoreinrichtung zur Erfassung von zumindest einem, einen Garvorgang beeinflussenden Parameter, mit zumindest einem Mikrokontroller zur Datenverarbeitung und Steuerung/Regelung von Garprozessen, mit zumindest einem Datenspeicher zum Speichern von Ablaufprogrammen, von Geräteparametern auch umgebender für den Garprozess relevanter Geräte, von Garguttypen und Garguttypenparametern und zur Dokumentation von Garprozessen für eine spätere Auswertung und Optimierung derselben, mit zumindest einer Datenschnittstelleneinrichtung, mit zumindest einem elektrischen Energiespeicher zur Energieversorgung, mit zumindest einer Kopplungseinrichtung zur lösbaren Verbindung der Steuerungs-, Regelungs- und Bedienvorrichtung mit dem Gargerät, mit zumindest einer Ausgabeeinrichtung zur Information eines Benutzers, und mit zumindest einer Eingabeeinrichtung zur Bedienung der Steuerungs-, Regelungs- und Bedienvorrichtung.

Die Stromversorgung der Steuerungs-, Regelungs- und Bedienvorrichtung kann beispielsweise durch eine Batterie, durch ein Thermoelement, durch induktive Kopplung wie z. B. im Falle eines Induktionsherdes oder durch einen Akku gewährleistet werden. Im Falle der Verwendung eines Akkus kann die Aufladung über eine Datenschnittstelleneinrichtung des Gargeräts, so z. B. über eine stromführende Leitung eines USB-Anschlusses, oder optional in einer separaten Ladestation vorgenommen werden.

Nachteilig ist bei der Verwendung einer Batterie, dass die gespeicherte elektrische Energie der auswechselbaren Batterie endlich ist und durch den bestimmungsgemäßen Betrieb des elektronischen Bratpfannensystems verbraucht wird. Ab einem gewissen niedrigen Maß an gespeicherter elektrischer Energie bzw. bei ausreichend verbrauchtem bzw. entleertem auswechselbaren elektrischen Energiespeicher können die elektronischen Elemente des Gargeräts der DE 10 2008 051 265 A1 somit nicht mehr betrieben und vom Benutzer genutzt werden. Hierzu muss der Benutzer die leere Batterie gegen eine ausreichend aufgeladene Batterie austauschen, was Aufwand bedeuten und Zeit sowie Geld für die Anschaffung der Batterie kosten kann.

Nachteilig ist bei der Verwendung eines Akku als elektrischen Energiespeicher bei der Steuerungs-, Regelungs- und Bedienvorrichtung der DE 10 2008 051 265 A1, dass auch dieser vom Benutzer wieder aufzuladen ist, falls die gespeicherte elektrische Energie verbraucht ist. Dies kann für den Benutzer einen lästigen Aufwand bedeuten.

Nachteilig ist bei der Verwendung eines Akku oder einer auswechselbaren Batterie als elektrischer Energiespeicher allgemein, dass die elektronischen Funktionen des Gargeräts der DE 10 2008 051 265 A1 solange nicht dem Benutzer zur Verfügung stehen, bis die Batterie ausgetauscht bzw. der Akku ausreichend aufgeladen ist. Dies kann die Verfügbarkeit einschränken.

Nachteilig ist bei der Steuerungs-, Regelungs- und Bedienvorrichtung der DE 10 2008 051 265 A1, dass eine thermoelektrische Energieerzeugung technisch aufwendig und entsprechend teuer sein kann.

Küchengeschirr mit einer am oder im Bodenbereich des Küchengeschirrs angeordneten Spule zur induktiven Aufnahme von Energie ist aus den Druckschriften WO 2013/007953 A1, WO 2010/080738 A1 und WO 2014/056786 A1 bekannt.

Nachteilig ist bei der induktiven Kopplung eines Induktionsherdes gemäß der DE 10 2008 051 265 A1, dass das Gargerät ausgebildet sein muss, induktiv elektrische Energie zum Betrieb der elektronischen Elemente zu erhalten. Auch muss der Induktionsherd entsprechend ausgebildet sein. Dies kann einen nicht unerheblichen Aufwand darstellen. Ferner können nur geeignete Induktionsherde und Gargeschirre miteinander hierzu verwendet werden. Auch kann die induktive Energieversorgung lediglich beim induktiven Beheizen des Gargeschirrs zum direkten Betreiben der elektronischen Elemente der Steuerungs-, Regelungs- und Bedienvorrichtung der DE 10 2008 051 265 A1 verwendet werden.

Der Erfindung stellt sich somit das Problem, ein Küchengeschirr der eingangs beschriebenen Art bereitzustellen, welches mittels induktiver Kopplung elektrische Energie erhalten und einfacher, kostengünstiger und bzw. oder robuster ausgebildet werden kann als bisher bekannte derartige Küchengeschirre. Alternativ oder zusätzlich soll die Herstellung des Küchengeschirrs vereinfacht werden. Alternativ oder zusätzlich sollen die Gestaltungsmöglichkeiten der induktiven Kopplung des Küchengeschirrs erhöht werden. Zumindest soll eine Alternative zu bekannten derartigen Küchengeschirren geschaffen werden.

Erfindungsgemäß wird dieses Problem durch ein Küchengeschirr mit den Merkmalen des Patentanspruchs 1 und des Patentanspruchs 12 und des Patentanspruchs 16 gelöst. Vorteilhafte Ausgestaltungen und Weiterbildungen der Erfindung ergeben sich aus den nachfolgenden Unteransprüchen.

Somit betrifft die Erfindung ein Küchengeschirr mit einem Bodenkörper mit einer Bodenfläche. Die Bodenfläche ist in einer Aufstelllage des Küchengeschirrs einem Untergrund zugewandt. Insbesondere ist die Bodenfläche ausgebildet, auf einem Untergrund aufgesetzt zu werden. Das Küchengeschirr weist auch wenigstens ein Induktionselement auf, welches ausgebildet ist, wenigstens mittels induktiver Kopplung elektrische Energie zu erhalten. Das Küchengeschirr kann jede Art von Küchengeschirren sein, welche in einer Küche zur Zubereitung, zu dessen Vorbereitung und bzw. oder zur Lagerung von Lebensmitteln sowie zum Anrichten zubereiteter Lebensmittel verwendet werden können. Dies können insbesondere Kochtöpfe, Schmortöpfe, Bratpfannen und dergleichen sein. Der Untergrund kann insbesondere eine Kochstelle eines Kochfelds bzw. eines Flächenkochfelds sowie einer beheizbaren Arbeitsplatte oder dergleichen sein, auf welcher das Küchengeschirr mit seiner Bodenfläche aufgesetzt werden kann, um dort bestimmungsgemäß betrieben bzw. benutzt zu werden.

Bei dem Küchengeschirr ist das Induktionselement gegenüber der Bodenfläche des Bodenkörpers elektrisch isoliert. Die elektrisch isolierende Wirkung kann über die Wahl bzw. über die Ausgestaltung wenigstens eines Materials umgesetzt werden, welches zwischen dem Induktionselement und der Bodenfläche des Bodenkörpers des Küchengeschirrs angeordnet ist, wie nachfolgend näher beschrieben werden wird. Zur Ausbildung der flächigen elektrischen Isolation können z.B. Materialien wie Epoxidharz, beispielsweise FR-4, aber auch z.B. Holz, Plastik, Glas, Keramik und dergleichen verwendet werden. Das Induktionselement kann vorzugsweise wenigstens ein Metall aufweisen bzw. aus einem Metall bestehen. Dies kann insbesondere Kupfer sein.

Erfindungsgemäß ist vorgesehen, dass die Isolierungsschicht urformend oder auflegend, insbesondere durch eine Drucktechnik, an der Bodenfläche aufgetragen ist. Hierdurch wird es möglich die Isolierungsschicht in einem hochgradig variablen und automatisierbaren Prozess aufzubringen. Auch wird es möglich eine möglichst geringe Schichtdicke der Isolierungsschicht zu erreichen.

Erfindungsgemäß ist weiterhin vorgesehen, dass der Isolierungskörper urformend oder auflegend an der Bodenfläche angeordnet ist. Hierdurch wird es möglich den Isolierungskörper in einem hochgradig variablen und automatisierbaren Prozess aufzubringen.

Erfindungsgemäß ist weiterhin vorgesehen, dass das Induktionselement urformend oder auflegend, insbesondere durch eine Drucktechnik, an dem Isolierungskörper oder der Isolierungsschicht aufgebracht ist. Hierdurch wird es möglich das Induktionselement in einem hochgradig variablen und automatisierbaren Prozess aufzubringen. Auch wird es möglich eine möglichst geringe Schichtdicke des Induktionselements zu erreichen.

Der Begriff Drucktechnik schließt Techniken wie Drucken, Stempeln, Bestreichen und dergleichen ein.

Vorzugsweise ist die Isolierung flächig ausgebildet. Eine flächige Isolierung erstreckt sich zumindest über die Belegungsfläche des Induktionselements hinaus und kann über die gesamte Bodenfläche des Bodenkörpers erstreckt sein.

In jedem Fall kann durch die, insbesondere flächige, elektrische Isolation zwischen der Bodenfläche des Bodenkörpers des Küchengeschirrs und dem Induktionselement erreicht werden, dass z.B. auf die Verwendung von Induktionselementen mit elektrisch isolierender Ummantelung und dergleichen wie z.B. leidende Lackdrähte zur Ausbildung der Windungen bzw. Wicklungen einer Induktionsspule verzichtet werden kann. Hierdurch können die Nachteile derartige Induktionsspulen vermieden werden, zu denen der konstruktionsbedingte vergleichsweise hohe bzw. dicke Aufbau in der Höhe gehört, welcher bei der Anordnung einer derartigen Induktionsspule aus elektrisch isolierend ummantelten Drähten zu einer signifikanten Beabstandung der Bodenfläche des Bodenkörpers des Küchengeschirrs gegenüber dem Untergrund wie z.B. der Kochstelle eines induktiven Kochfelds führen und hierdurch die induktive Beheizung und bzw. oder die induktive Kopplung der elektrischen Energie verschlechtern kann. Mit anderen Worten ist eine gewisse Dicke von Drahtwicklungen unvermeidbar, da sowohl die elektrisch leitfähigen Drähte bzw. Litzen selbst als auch deren elektrisch isolierende Ummantelung einen gewissen Bauraum in der Höhe unterhalb der Bodenfläche des Bodenkörpers des Küchengeschirrs erfordern, was jedoch für derartige Küchengeschirr nachteilig sein kann.

Erfindungsgemäß kann die, insbesondere flächige, elektrische Isolation zwischen der Bodenfläche des Bodenkörpers des Küchengeschirrs und dem Induktionselement diese Nachteile vermeiden oder zumindest reduzieren, indem ein flacherer Aufbau erreicht und dennoch wenigstens ein elektrisch isoliert angeordnetes Induktionselement verwendet werden kann. Hierzu kann die, insbesondere flächige, elektrische Isolation z.B. als Beschichtung flächig und dünn auf die Bodenfläche des Bodenkörpers des Küchengeschirrs aufgetragen und anschließend das Induktionselement auf die Isolierungsschicht aufgebracht werden, wie nachfolgend näher erläutert werden wird. Alternativ kann z.B. auch eine Folie als Isolierungskörper verwendet und das Induktionselement z.B. durch Drucken auf die der Bodenfläche des Bodenkörpers des Küchengeschirrs abgewandte Seite aufgebracht werden, wie nachfolgend näher erläutert werden wird. Alternativ können auch ein Isolierungskörper und das Induktionselement separat und insbesondere jeweils dünnwandig hergestellt, miteinander verbunden und gemeinsam als ein Bauteil z.B. durch Kleben auf die Bodenfläche des Bodenkörpers des Küchengeschirrs aufgebracht werden, wie nachfolgend näher erläutert werden wird. In jedem Fall können die zuvor beschrieben Eigenschaften und Vorteile auf unterschiedliche Art und Weise umgesetzt werden.

Gemäß einem Aspekt der Erfindung kann der Isolierungskörper auch Montiert werden, wenn dieser noch nicht oder noch nicht vollständig ausgehärtet ist. Ein solcher Isolierungskörper hat vorzugsweise eine noch weiche und/oder klebrige Fläche mit welcher der Isolierungskörper an dem Küchengeschirr montiert wird.

Der Begriff "flacherer Aufbau" wird verstanden als eine Räumliche Struktur, welche in einer Raumachse eine Mächtigkeit von 1 Millimeter, insbesondere von 0,25 Millimeter nicht überschreitet und zugleich in den anderen beiden Raumachsen eine Ausdehnung aufweist, welche ein Vielfaches der kleinsten Ausdehnung aufweist.

Es hat sich als ausreichend erwiesen, dass das wenigstens eine Induktionselement eine Mächtigkeit oder Schichtdicke von weniger als 1 Millimeter aufweist. Hierdurch ist einerseits eine gute Einkopplung von induktiver Energie in den Bodenkörper des Küchengeschirrs und andererseits ein ausreichender Eintrag von Energie in das Induktionselement möglich. Insbesondere ist vorgesehen, dass das Induktionselement eine Mächtigkeit oder Schichtdicke von kleiner 0,25 Millimeter aufweist. Gemäß einer exemplarischen Ausführungsform ist die Mächtigkeit oder Schichtdicke des Induktionselements größer ist als 1 Mikrometer.

Gemäß einem Aspekt der Erfindung ist eine Isolierungsschicht flächig auf die Bodenfläche des Bodenkörpers aufgetragen und das Induktionselement ist auf der Isolierungsschicht aufgebracht. Die Isolierungsschicht kann auch als isolierende Beschichtung bezeichnet werden. Das Auftragen kann beispielsweise durch Drucken, durch Stempeln, durch Bestreichen und dergleichen erfolgen. Anschließend kann das Induktionselement z.B. ebenfalls durch Drucken, durch Stempeln, durch Bestreichen und dergleichen auf die ausgehärtete bzw. ausgetrocknete Isolierungsschicht aufgetragen werden. Alternativ kann das Induktionselement als Körper ausgebildet und anschließend z.B. durch Kleben auf die Isolierungsschicht aufgebracht werden. Insbesondere kann das Induktionselement auf die noch nicht ausgehärtete bzw. ausgetrocknete Isolierungsschicht aufgebracht und durch deren Aushärten bzw. Austrocknen stoffschlüssig auf der Isolierungsschicht gehalten werden. Hierdurch kann die Verwendung eines zusätzlichen Klebemittels sowie ein entsprechender Arbeitsschritt vermieden und damit die Herstellungs- und Montagekosten geringgehalten werden.

Das Aushärten der Isolierungsschicht erfolgt vorzugsweise nach dem Aufbringen des Induktionselements. Es kann aber auch vor dem Aufbringen des Induktionselements oder erst nach einem Aufbringen einer Abdeckung erfolgen.

Gemäß einem Aspekt der Erfindung hat der Isolierungskörper oder die Isolierungsschicht eine Schichtdicke oder Mächtigkeit von wenigstens einem Millimeter, vorzugsweise mindestens 2 Millimeter.

In der flächigen Ausdehnung, parallel zur Aufstellebene des Küchengeschirrs ist der Isolierungskörper oder die Isolierungsschicht mindestens 1 Millimeter, besser mindestens 2 Millimeter über die flächige Ausdehnung des Induktionselements bzw. dessen Teilelemente wie Leiterbahnen erstreckt. Der Isolierungskörper oder die Isolierungsschicht bedeckt somit bis zu 100 Prozent der Bodenfläche des Küchengeschirrs.

Gemäß einem weiteren Aspekt der Erfindung ist die Isolierungsschicht hitzebeständig ausgebildet. Dies kann durch eine entsprechende Materialauswahl bzw. Materialbeschaffenheit der Isolierungsschicht erreicht werden. Dies kann die Verwendung des Küchengeschirrs bei entsprechend hohen Temperaturen wie z.B. zum Braten als Pfanne ermöglichen.

Gemäß einem weiteren Aspekt der Erfindung ist ein Isolierungskörper flächig an der Bodenfläche des Bodenkörpers angeordnet und das Induktionselement ist auf dem Isolierungskörper angeordnet. Vorzugsweise ist ein Isolierungskörper ein Formkörper, insbesondere vorgefertigter Formkörper, welcher an der Bodenfläche des Bodenkörpers montiert wird. Der Isolierungskörper ist somit separat hergestellt und kann z.B. mittels Kleben an der Bodenfläche des Bodenkörpers des Küchengeschirrs angeordnet werden. Dem Bodenfläche des Bodenkörpers abgewandt kann dann das Induktionselement auf dem Isolierungskörper angeordnet werden. Dies kann z.B. als separater Körper oder auch als Beschichtung wie zuvor beschrieben erfolgen, wie nachfolgend näher beschrieben werden wird. Der Isolierungskörper kann hierzu ggfs. Vertiefungen aufweisen, um das Induktionselement aufzunehmen. Diese Vertiefungen können durch die Formgebung des Isolierungskörpers z.B. beim Spritzgießen vorgesehen werden oder auch nachträglich z.B. durch Fräsen oder durch Ätzen, vergleichbar der Herstellung von Halbleiterplatinen, ausgebildet werden.

Gemäß einem weiteren Aspekt der Erfindung ist der Isolierungskörper als Folie ausgebildet und das Induktionselement ist auf dem Isolierungskörper aufgebracht. Die Ausbildung des Isolierungskörpers als Folie kann eine möglichst geringe Dicke in der Höhe ermöglichen. Auch kann eine Folie vergleichsweise flexibel geformt und verwendet werden. Auf dem Isolierungskörper als Folie kann das Induktionselement als separater Körper z.B. durch Kleben aufgebracht oder auch als Beschichtung aufgetragen werden, wie zuvor beschrieben.

Gemäß einem weiteren Aspekt der Erfindung sind der Isolierungskörper und das Induktionselement separat ausgebildet und anschließend miteinander verbunden. Dies kann die Herstellung der beiden separaten Körper vereinfachen, auch wenn dies andererseits einen zusätzlichen Montageschritt z.B. für ein Verkleben erfordern kann.

Gemäß einem Aspekt deckt das Induktionselement zwischen 1 Prozent und 70 Prozent der Bodenfläche des Küchengeschirrs ab. In diesem Bereich ist ein guter Kompromiss zwischen Abschirmung durch das Induktionselement und Einkopplung in die Bodenfläche erreicht. Bei einigen Ausführungsformen des Induktionselement ist es auch möglich, dass dieses über 20 Prozent oder sogar über 30 Prozent der Bodenfläche des Küchengeschirrs abdeckt.

Bei einem Induktionselement kann die abdeckende Fläche auch als Summe von Teilflächen verstanden werden, welche nicht miteinander verbundenen sind oder zumindest abschnittsweise Abstände zueinander aufweisen. Bei einem aus Leiterbahnen gefertigten Induktionselement können die Leiterbahnen zueinander einen Abstand aufweisen, welcher größer ist als die Breite der Leiterbahn.

Gemäß einem Aspekt haben die Leiterbahnen eine Breite von weniger als 2 Millimeter. Der Abstand der Leiterbahnen kann beispielsweise bis zu 3 Millimeter betragen. Vorzugsweise ist der Abstand der Leiterbahnen kleiner als 1 Millimeter.

Ein aus Leiterbahnen gebildetes Induktionselement ist vorzugsweise als Spule ausgeführt. Eine Ausführungsform sieht vor, dass die Spule zwischen 2 und 15, vorzugsweise zwischen 3 und 10 Windungen aufweist.

Das Induktionselement hat einen Abstand zu einem nächsten induktiv wirksamen Bauteil des Küchengeschirrs, insbesondere zu dem Boden des Küchengeschirrs von wenigstens 1 Millimeter, vorzugsweise von mehr als 2 Millimeter jedoch nicht mehr als 10 Millimeter. Dies ermöglicht eine gute Aufnahme von Energie in das Induktionselement.

Gemäß einem weiteren Aspekt der Erfindung ist der Isolierungskörper transparent oder nichttransparent ausgebildet. Dies kann die optischen Gestaltungsmöglichkeiten erhöhen.

Gemäß einem weiteren Aspekt der Erfindung weist der Isolierungskörper der Bodenfläche des Bodenkörpers zugewandt wenigstens ein Sensorelement auf. Dies kann die Möglichkeiten der Verwendung des Küchengeschirrs erhöhen.

Gemäß einem weiteren Aspekt der Erfindung ist das Sensorelement ein Temperatursensor, welcher zumindest abschnittsweise in berührendem Kontakt mit der Bodenfläche des Bodenkörpers steht. Dies kann eine sensorische Temperaturerfassung einer Temperatur des Bodenkörpers des Küchengeschirrs ermöglichen.

Gemäß einem weiteren Aspekt der Erfindung weist der Isolierungskörper einen ferromagnetischen Körper auf, welcher vorzugsweise dem Induktionselement zugewandt angeordnet ist. Dies kann, insbesondere bei einer Anordnung dem Induktionselement zugewandt, die Wirkung des Induktionselements erhöhen.

Der Begriff "dem Induktionselement zugewandt" ist so zu verstehen, dass der Raumschwerpunkt des ferromagnetischen Körpers näher an dem Induktionselement ist als der Raumschwerpunkt des Isolierungskörpers. Vorzugsweise ist der ferromagnetische Körper auf einer dem Induktionselement zugewandten Seite in oder an dem Isolierungskörper angeordnet.

Vorzugsweise ist der ferromagnetischen Körper flächig ausgeführt und/oder hat eine Mächtigkeit von weniger als 2 Millimeter, vorzugsweise weniger als 1 Millimeter. Für die Wirksamkeit des ferromagnetischen Körpers hat es sich als günstig erwiesen, das der ferromagnetischen Körper beispielsweise aus einem Metall besteht und/oder beispielsweise mindestens eine Mächtigkeit von wenigstens 0,5 Mikrometer, bevorzugt mindestens 3 Mikrometer aufweist.

Mit dem Begriff "Mächtigkeit" ist die Erstreckung quer zur ausbreitungsebene des Körpers gemeint, insbesondere orthogonal zur Aufstellfläche des Küchengeschirrs.

Gemäß einem weiteren Aspekt der Erfindung ist der Isolierungskörper hitzebeständig ausgebildet. Dies kann durch eine entsprechende Materialauswahl bzw. Materialbeschaffenheit des Isolierungskörpers erreicht werden. Dies kann die Verwendung des Küchengeschirrs bei entsprechend hohen Temperaturen wie z.B. zum Braten als Pfanne ermöglichen.

Gemäß einem weiteren Aspekt der Erfindung sind wenigstens zwei Induktionselemente vorgesehen und durch den Isolierungskörper zueinander elektrisch isoliert, wobei die beiden Induktionselemente vorzugsweise in der Höhe übereinander angeordnet sind. Dies kann die Gestaltungsmöglichkeiten des Küchengeschirrs erhöhen.

Gemäß einem weiteren Aspekt der Erfindung ist das Induktionselement als Induktionsspule ausgebildet. Dies kann eine einfache, kostengünstige und bzw. oder robuste Art und Weise der Umsetzung eines Induktionselements darstellen. Insbesondere kann eine großflächige Einkopplung durch die Wahl der Kontur und bzw. oder der Größe der Induktionsspule erreicht werden, was die induktive Kopplung verbessern kann. Die Kontur der Induktionsspule kann insbesondere kreisförmig aber auch rechteckig, oval und dergleichen sein, je nach Anwendungsfall und Küchengeschirr bzw. Untergrund.

Gemäß einem weiteren Aspekt der Erfindung ist die Induktionsspule konzentrisch zu einem Mittelpunkt der Bodenfläche des Bodenkörpers ausgebildet und angeordnet. Dies kann die Wirkung der Induktionsspule erhöhen. Auch kann dies die Kompatibilität des erfindungsgemäßen Küchengeschirrs mit unterschiedlichen Untergründen wie insbesondere mit unterschiedlichen Kochfeldern desselben Herstellers und insbesondere unterschiedlicher Hersteller sicherstellen, da üblicherweise die induktiven Heizspulen sowie ggfs. zusätzliche induktiv energie- und bzw. oder datenübertragungsfähige Spulen bei z.B. einem Kochfeld ebenfalls mittig konzentrisch zu der jeweiligen Kochstelle oder dergleichen angeordnet sind.

Gemäß einem weiteren Aspekt der Erfindung ist auf dem Induktionselement, also auf einer der Bodenfläche abgewandten Seite des Induktionselements, eine Abdeckung ausgebildet. Die Abdeckung besteht aus einem elektrisch nichtleitendem Material. Insbesondere ist das Material ausgewählt aus einer Gruppe umfassend Silikon, Keramik, Kunststoff oder eine Kombination daraus. Auch andere Materialien wie Epoxidharz, beispielsweise FR-4, aber auch Holz, Plastik, Glas und dergleichen können verwendet werden.

Die Abdeckung ist, insbesondere in Flächenbereichen der Bodenfläche welche nicht von dem Induktionselement bedeckt sind, auch an der Bodenfläche und/oder der Isolierungsschicht und/oder dem Isolierungskörper ausgebildet. Je nach Art der Herstellung beziehungsweise Anbringung der Abdeckung an dem Bodenkörper ist die Abdeckung in Kontakt mit dem Induktionselement und mit der Bodenfläche und/oder der Isolierungsschicht und/oder dem Isolierungskörper.

Die Abdeckung ist gemäß einer Ausführungsform über mindestens 70 Prozent der Bodenfläche, vorzugsweise über die gesamte Bodenfläche erstreckt. Hierdurch wird ein guter mechanischer und elektrischer Abschluss des Bodenkörpers erreicht und die darin eingebundenen elektrischen Bauteile sind gut gegen äußere Einflüsse geschützt.

Die Abdeckung hat, bezogen auf eine Flächennormale der Bodenfläche eine Mächtigkeit oder Schichtdicke von weniger als 5 Millimeter. Es hat sich, insbesondere bei einer urformenden Herstellung der Abdeckung an dem Bodenkörper, als vorteilhaft erwiesen, dass die Mächtigkeit oder Schichtdicke der Abdeckung in einem Bereich zwischen 3,3 Millimeter und 0,5 Millimeter ausgeführt ist. Dieser Bereich ermöglicht einen guten Kompromiss zwischen hoher und langjähriger Gebrauchstauglichkeit auf der einen Seite und auf der anderen Seite einer möglichst geringen Entfernung des Induktionselements von seiner Anregungsquelle. Die hohe und langjährige Gebrauchstauglichkeit schließt insbesondere die Beständigkeit der Abdeckung gegenüber mechanischen, thermischen und chemischen Einwirkungen ein. In idealer Weise ist die Mächtigkeit oder Schichtdicke der Abdeckung in einem Bereich zwischen 2,4 Millimeter und 1,3 Millimeter ausgeführt.

Gemäß einem weiteren Aspekt der Erfindung bildet die Abdeckung die Aufstellfläche des Küchengeschirrs.

Gemäß einem weiteren Aspekt der Erfindung ist das Induktionselement ferner ausgebildet, einen einseitigen, vorzugsweise einen beidseitigen, Datenaustausch zu ermöglichen. Insbesondere kann hierdurch ein Pairing ermöglicht werden. In jedem Fall kann der Datenaustausch einseitig von dem Untergrund wie z.B. von einem Kochfeld bzw. von einer Kochstelle eines Kochfelds in Richtung Küchengeschirr oder umgekehrt erfolgen. Auch kann ein Datenaustausch in beide Richtungen erfolgen, was den Aufwand und die Kosten erhöhen jedoch die Möglichkeiten des Datenaustausches sowie der Verwendung der ausgetauschten Daten erweitern kann.

Erfindungsgemäß ist auch ein Verfahren zur Herstellung eines Küchengeschirrs vorgesehen. Ein Verfahren zur Herstellung eines Küchengeschirrs weist insbesondere drei Schritte auf. Ein Schritt ist das Bereitstellen eines Bodenkörpers des Küchengeschirrs. Ein weiterer Schritt ist das Auftragen einer Isolierungsschicht auf die Bodenfläche des Bodenkörpers oder das Anordnen eines Isolierungskörpers auf der Bodenfläche des Bodenkörpers. Ein weiterer Schritt ist das Aufbringen eines Induktionselements auf die Isolierungsschicht oder auf den Isolierungskörper. Erfindungsgemäß erfolgt das Auftragen einer Isolierungsschicht und/oder das Aufbringen eines Induktionselements und/oder das Anordnen eines Isolierungskörpers urformend oder auflegend, insbesondere mittels einer Drucktechnik. Hierdurch kann ein schneller, sicherer und variabler Produktionsprozess etabliert werden. Auch ist es so möglich einen geringen Aufbau beziehungsweise eine geringe Schichtdicke auf der Bodenfläche zu erzielen, was die induktive Einkopplung in das Induktionselement und in den Bodenkörper des Küchengeschirrs ermöglicht.

Gemäß einem Aspekt der Erfindung ist die Reihenfolge der vorstehend genannten Schritte nicht festgelegt. So ist es gemäß einer Ausgestaltungsform möglich, dass das Induktionselement auf einen als Folie ausgeführten Isolierungskörper gedruckt oder gestempelt oder geklebt wird und der Isolierungskörper mit dem Induktionselement anschließend an der Bodenfläche montiert wird. Dabei kann wird der Isolierungskörper vorzugsweise adhäsiv oder stoffschlüssig an der Bodenfläche befestigt. Gemäß einer anderen Ausgestaltungsform wird zuerst eine Isolierungsschicht auf die Bodenfläche aufgetragen, beispielsweise mittels drucken, stempeln, streichen, sprühen, gießen. Anschließend wird das Induktionselement auf die Isolierungsschicht aufgebracht. Dabei kann die Isolierungsschicht noch feucht oder teilweise oder vollständig ausgehärtet sein.

Gemäß einem Aspekt ist es möglich, dass die Isolierungsschicht oder der Isolierungskörper auf der dem Induktionselement zumindest abschnittsweise adhäsiv oder stoffschlüssig ausgeführt ist. Hierdurch wird eine bessere Haftung des Induktionselements an der Isolierungsschicht oder dem Isolierungskörper erreicht.

Gemäß einem Aspekt wird das Induktionselement auf die, insbesondere adhäsive oder stoffschlüssig ausgeführte oder noch nicht vollständig ausgehärtete Isolierungsschicht oder Isolierungskörper aufgelegt. Alternativ wird das Induktionselement auf die Isolierungsschicht oder den Isolierungskörper urformend, insbesondere mittels drucken, stempeln, streichen, sprühen, gießen, aufgebracht.

Gemäß einem Aspekt erfolgt nach dem Schritt des Auftragens der Isolierungsschicht und/oder dem Schritt des Anordnens eines Isolierungskörpers und/oder nach dem Schritt des Aufbringens des Induktionselements ein Aushärten der Isolierungsschicht oder des Isolierungskörpers oder des Induktionselements.

Gemäß einem Aspekt erfolgt, vorzugsweise als letzter Schritt, insbesondere nach dem Schritt des Auftragens der Isolierungsschicht und/oder nach dem Schritt des Anordnens des Isolierungskörpers und/oder nach dem Schritt des Aufbringens des Induktionselements ein Ausbilden einer Abdeckung an der Bodenfläche oder ein Befestigen einer Abdeckung an der Bodenfläche. Hierbei können einzelne oder alle Elemente von Isolierungsschicht und/oder Isolierungskörper und/oder Induktionselement vorher mit dem Bodenkörper verbunden worden sein. Auch ist es möglich, dass vorher einzelne oder alle Elemente von Isolierungsschicht und/oder Isolierungskörper und/oder Induktionselement vorher mit der Abdeckung verbunden worden sind. Das Ausbilden einer Abdeckung an der Bodenfläche kann beispielsweise durch Urformen geschehen.

Erfindungsgemäß ist auch ein Küchengeschirrerzeugnis, insbesondere Küchengeschirr, vorgesehen, welches nach dem Verfahren gemäß einem der Ansprüche 12 bis 15 hergestellt ist. Insbesondere ist das Küchengeschirr nach einem der Ansprüche 1 bis 11 ausgeführt.

Mehrere Ausführungsbeispiele der Erfindung sind in den Zeichnungen rein schematisch dargestellt und werden nachfolgend näher beschrieben. Es zeigt
- Figur 1: eine seitliche Darstellung eines erfindungsgemäßen Küchengeschirrs gemäß eines ersten Ausführungsbeispiels;
- Figur 2: eine seitliche Darstellung eines erfindungsgemäßen Küchengeschirrs gemäß eines zweiten Ausführungsbeispiels;
- Figur 3: eine seitliche Darstellung eines erfindungsgemäßen Küchengeschirrs gemäß eines dritten Ausführungsbeispiels;
- Figur 4: eine seitliche Darstellung eines erfindungsgemäßen Küchengeschirrs gemäß eines vierten Ausführungsbeispiels; und
- Figur 5: eine seitliche Darstellung eines erfindungsgemäßen Küchengeschirrs gemäß eines fünften Ausführungsbeispiels; und
- Figur 6: eine seitliche Darstellung eines erfindungsgemäßen Küchengeschirrs gemäß eines sechsten Ausführungsbeispiels; und
- Figur 7: eine Darstellung des erfindungsgemäßen Verfahrens gemäß Ausführungsbeispiels.

Die o.g. Figuren werden in kartesischen Koordinaten betrachtet. Es erstreckt sich eine Längsrichtung (nicht dargestellt), welche auch als Tiefe oder als Länge bezeichnet werden kann. Senkrecht zur Längsrichtung erstreckt sich eine Querrichtung Y, welche auch als Breite Y bezeichnet werden kann. Senkrecht sowohl zur Längsrichtung als auch zur Querrichtung Y erstreckt sich eine vertikale Richtung Z, welche auch als Höhe Z bezeichnet werden kann. Betrachtet wird ein erfindungsgemäßes Küchengeschirr 1 in Form eines Gargeschirrs 1 als Topf 1. Der Topf 1 weist einen Küchengeschirrkörper 10 in Form eines Gargeschirrkörpers 10 als Topfkörper 10 auf. Der Topfkörper 10 weist eine zylindrisch in der Höhe Z nach oben ragende Wandung 11 auf, welche sich von einem kreisförmigen Bodenkörper 12 randseitig wegerstreckt. Der Bodenkörper 12 ist massiv, d.h. deutlich dicker als die Wandung 11, und aus einem ferromagnetischen Metall ausgebildet. Die in der Höhe Z obere Fläche bzw. Innenfläche (nicht bezeichnet) des Bodenkörpers 12 und die Wandung 11 bilden dabei einen Aufnahmeraum (nicht bezeichnet) bzw. einen Garraum im Inneren des Topfes 1, in welchem zuzubereitende Lebensmittel aufgenommen werden können, um in diesem Fall eines Topfes 1 z.B. gekocht zu werden. Dem Garraum in der Höhe Z gegenüberliegend weist der Bodenkörper 12 eine kreisförmige ebene Bodenfläche 13 auf, welche in der Höhe Z nach unten hin ausgebildet ist, um auf z.B. einer Kochstelle eines induktiven Kochfelds aufgesetzt zu werden. Über den Bodenkörper 12 kann der Topf 1 induktiv beheizt werden. Von der Wandung 11 kann sich seitlich wenigstens ein Griffelement in Form eines Griffs weg erstrecken (nicht dargestellt), mit welchem die Pfanne 1 von einem Benutzer gehandhabt werden kann.

Um die induktive Einkopplung von elektrischer Energie seitens z.B. eines Kochfelds in den Topf 1 zu ermöglichen, weist der Topf 1 wenigstens ein Induktionselement 15 auf, welches in der Höhe Z unterhalb der Bodenfläche 13 des Bodenkörpers 12 angeordnet und flächig gegenüber der Bodenfläche 13 des Bodenkörpers 12 elektrisch isoliert ist. Dies kann erfindungsgemäß auf verschiedene Arten und Weisen wie folgt umgesetzt werden:

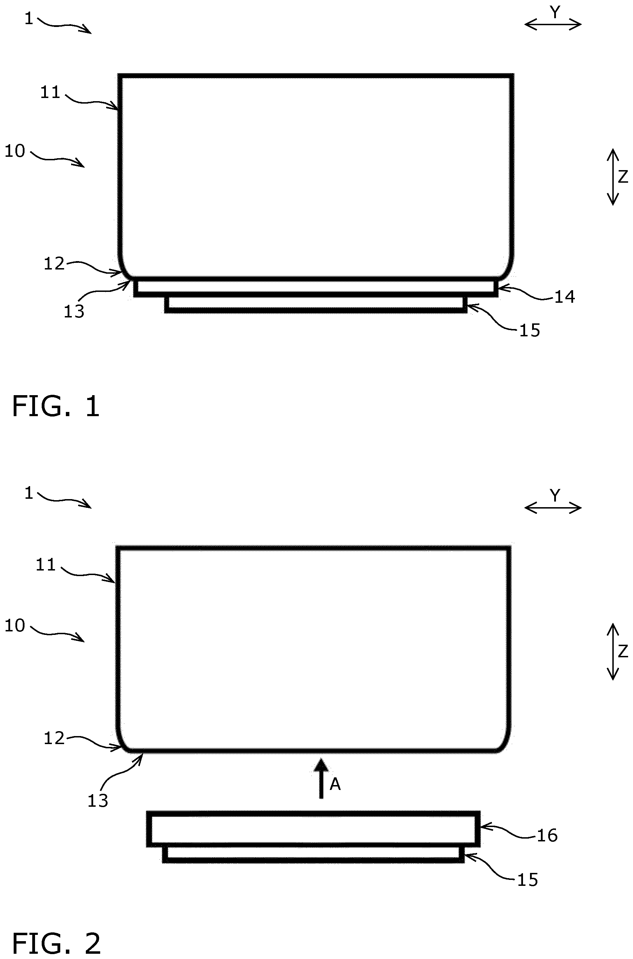

Figur 1 zeigt eine seitliche Darstellung eines erfindungsgemäßen Küchengeschirrs 1 gemäß einem ersten Ausführungsbeispiel. Auf die Bodenfläche 13 des Bodenkörpers 12 wird in einem ersten Arbeitsschritt in der Höhe Z von unten eine Isolierungsschicht 14 flächig aufgetragen. Die Isolierungsschicht 14 kann auch als elektrisch isolierende Beschichtung bezeichnet werden. Dies kann z.B. durch das flächige Auftragen eines hitzebeständigen Epoxidharzes in einem flüssigen bzw. pastösen Zustand erfolgen, welches dann aushärten bzw. austrocknen kann. Anschließend wird das Induktionselement 15 in Form einer elektrisch leitfähigen Anordnung von metallischen Windungen auf der Isolierungsschicht 14 aufgebracht, was z.B. durch Drucken, Stempeln und dergleichen erfolgen kann.

Figur 2 zeigt eine seitliche Darstellung eines erfindungsgemäßen Küchengeschirrs 1 gemäß einem zweiten Ausführungsbeispiel. In diesem Fall wird ein Isolierungskörper 16 verwendet, welcher als massives Trägerelement separat z.B. aus einem hitzebeständigen Kunststoff hergestellt und in der Höhe Z von unten mit dem ebenfalls separat hergestellten Induktionselement 15 z.B. durch Kleben miteinander verbunden wird. Dann wird dieses einteilige Bauteil z.B. durch Kleben in einer Montagerichtung A in der Höhe Z von unten an der Bodenfläche 13 des Bodenkörpers 12 befestigt.

Alternativ könnte der Isolierungskörper 16 auch eine Folie sein, auf welcher das separat hergestellte Induktionselement 15 z.B. durch Kleben angeordnet oder auf welcher das Induktionselement 15 wie zuvor beschrieben z.B. durch Drucken aufgebracht werden kann.

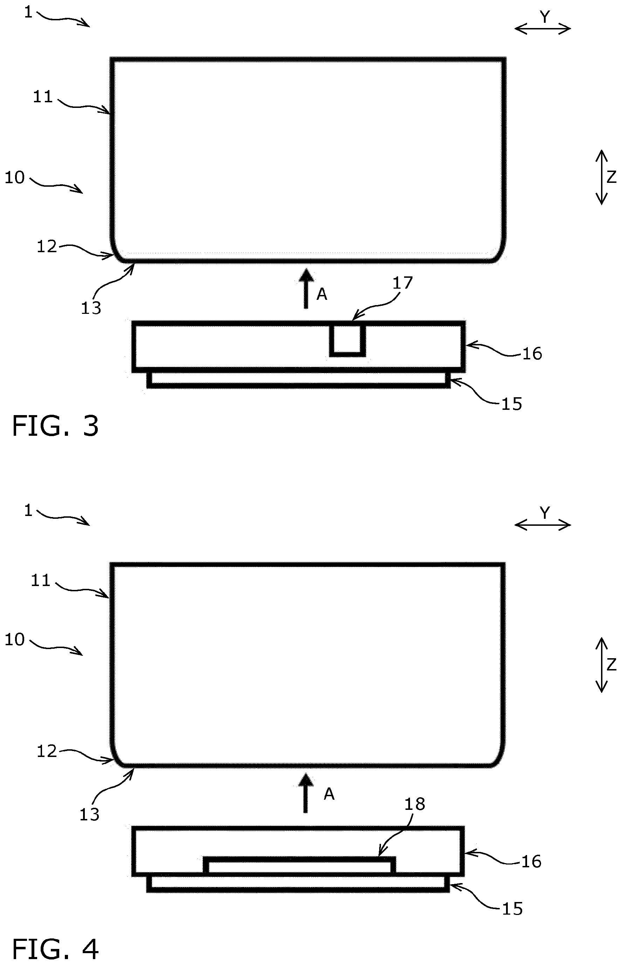

Figur 3 zeigt eine seitliche Darstellung eines erfindungsgemäßen Küchengeschirrs 1 gemäß einem dritten Ausführungsbeispiel. Ergänzend zu dem zweiten Ausführungsbeispiel der Figur 2 ist in diesem Fall ein Sensorelement 17 in Form eines Temperatursensors 17 in dem Isolierungskörper 16 angeordnet. Der Temperatursensor 17 ist dabei in der Höhe Z von oben in dem Isolierungskörpers 16 derart angeordnet, dass der Temperatursensor 17 im befestigten Zustand des Isolierungskörpers 16 in berührendem Kontakt mit der Bodenfläche 13 des Bodenkörpers 12 steht.

Figur 4 zeigt eine seitliche Darstellung eines erfindungsgemäßen Küchengeschirrs 1 gemäß einem vierten Ausführungsbeispiel. In diesem Fall ist, in der Höhe Z dem Induktionselement 15 zugewandt und ggfs. in berührendem Kontakt mit dem Induktionselement 15, ein ferromagnetischer Körper 18 flächig in dem Isolierungskörper 16 angeordnet, um die Wirkung des Induktionselements 15 zu verstärken.

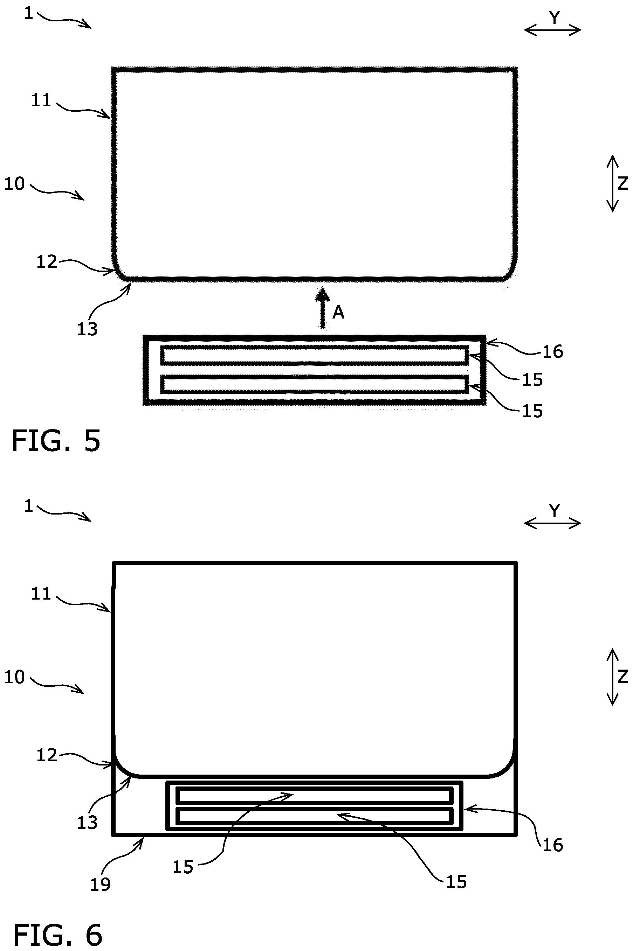

Figur 5 zeigt eine seitliche Darstellung eines erfindungsgemäßen Küchengeschirrs 1 gemäß einem fünften Ausführungsbeispiel. In diesem Fall werden zwei identische Induktionselemente 15 verwendet, welche in der Höhe Z übereinander innerhalb des Isolierungskörpers 16 angeordnet sind. Dies kann die Gestaltungsmöglichkeiten erhöhen.

In jedem Fall kann das Induktionselement 15 als Induktionsspule 15 ausgebildet sein und auch als Ladespule 15 oder als Energy-Harvesting-Spule 15 bezeichnet werden. Die Induktionsspule 15 kann konzentrisch zum Mittelpunkt des kreisförmigen Bodenkörpers 12 des Topfes 1 ausgebildet und angeordnet sein, so dass sich eine punktsymmetrische Ausbildung und Anordnung ergibt.

Im Vergleich zu elektrisch isolierend ummantelten Drähten, welche üblicherweise als Windungen bzw. Wicklungen von Induktionsspule verwendet werden, bieten die Induktionselemente 15 und insbesondere die Induktionsspulen 15 des erfindungsgemäßen Küchengeschirrs 1 z.B. gemäß der zuvor beschriebenen Ausführungsbeispiele eines erfindungsgemäßen Topfes 1 u.a. den Vorteil, dass z.B. als gedruckte Induktionsspule 15 vergleichsweise wenig Raum, insbesondere in der Höhe Z, für die Anordnung bzw. Unterbringung der Induktionsspule 15 benötigt wird. Auch lassen sich durch die separate Herstellung der Induktionsspule 15 sowie z.B. durch das Aufdrucken der Induktionsspule 15 komplexere Spulengeometrien, insbesondere einfacher, umsetzen als bisher bekannt. Insgesamt kann die Herstellung und bzw. oder Montage der Induktionsspule 15 im Vergleich zu Induktionsspulen aus gewickelten ummantelten Drähten vereinfacht, beschleunigt und bzw. oder kostengünstiger gestaltet werden. Dies gilt insgesamt für die Umsetzung der Möglichkeiten der induktiven Kopplung, welche z.B. auch für ein Pairing oder für eine sonstige einseitige oder beidseitige Datenübertragung verwendet werden kann.

Figur 6 zeigt eine seitliche Darstellung eines erfindungsgemäßen Küchengeschirrs 1 gemäß gemäß eines sechsten Ausführungsbeispiels. In diesem Fall wird der Isolierungskörper 16 von einem Abdeckelement 19 umschlossen. Der Isolierungskörper 16 kann dabei ein oder wie gezeigt mehrere Induktionselemente 15 aufweisen.

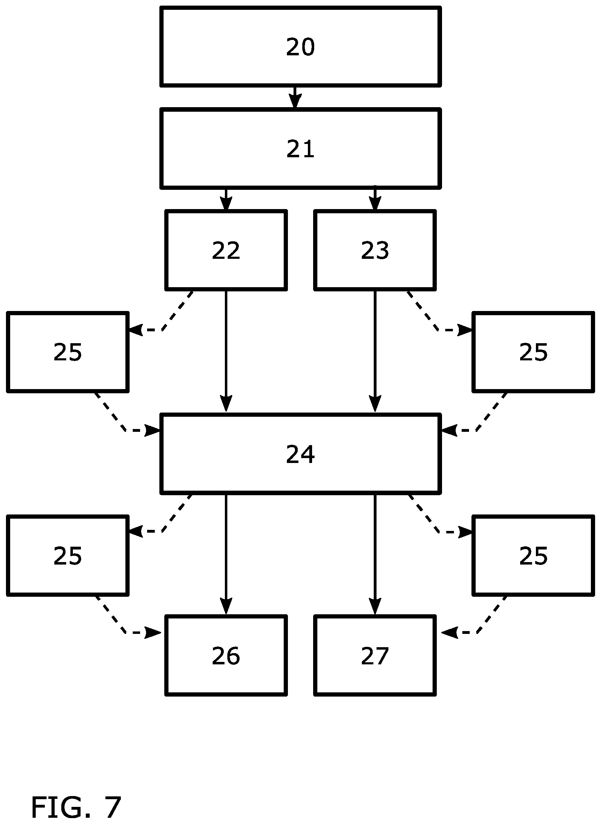

Figur 7 zeigt eine Darstellung des erfindungsgemäßen Verfahrens. Das Verfahren umfasst zumindest die Schritte Bereitstellen 21 eines Bodenkörpers eines Küchengeschirrs und Auftragen 22 einer Isolierungsschicht auf eine Bodenfläche des Bodenkörpers oder Anordnen 23 eines Isolierungskörpers auf der Bodenfläche und Aufbringen 24 eines Induktionselements auf die Isolierungsschicht oder auf den Isolierungskörper. Induktionselements und Isolierungsschicht bzw. Isolierungskörper können dabei gemeinsam als Einheit an dem Bodenkörper angeordnet werden.

Bei dem Verfahren 20 ist optional ein Schritt des Aushärtens 25 der Isolierungsschicht oder des Isolierungskörpers vorgesehen. Dieser Schritt erfolgt nach dem Schritt des Auftragens 22 oder nach dem Schritt des Anordnens 23 oder nach dem Schritt des Aufbringens 24.

Das Verfahren 20 kann verschiedene Variationen aufweisen, welche von der Erfindung alle umfasst sein sollen. So kann das Auftragen 22 der Isolierungsschicht vor dem Aufbringen 24 des Induktionselements oder nach dem Aufbringen 24 des Induktionselements erfolgen. Auch können Auftragen 22 und Aufbringen 24 gleichzeitig durchgeführt werden. Gemäß einem besonderen Aspekt ist es möglich, dass mehrmals ein Auftragen 22 durchgeführt wird, vorzugsweise wenigstens einmal vor dem Aufbringen 24 und wenigstens einmal nach dem Aufbringen 24. Dasselbe gilt auch für das Anordnen 23 des Isolierungskörpers.

Ein weiterer Aspekt des Verfahrens 20 ist, dass nach dem Schritt des Auftragens 22 der Isolierungsschicht oder nach dem Schritt des Anordnens 23 des Isolierungskörpers ein Ausbilden 26 einer Abdeckung an der Bodenfläche oder ein Befestigen 27 einer Abdeckung an der Bodenfläche erfolgt.

### Bezugszeichenliste (Bestandteil der Beschreibung)

- A: Montagerichtung

- Y: Querrichtung; Breite
- Z: vertikale Richtung; Höhe

- 1: Küchengeschirr; Gargeschirr; Topf
- 10: Küchengeschirrkörper; Gargeschirrkörper; Topfkörper
- 11: Wandung
- 12: Bodenkörper
- 13: Bodenfläche
- 14: Isolierungsschicht
- 15: Induktionselement; Induktionsspule; Ladespule; Energy-Harvesting-Spule
- 16: Isolierungskörper
- 17: Sensorelement; Temperatursensor
- 18: ferromagnetischer Körper
- 19: Abdeckung

- 20: Verfahren
- 21: Bereitstellen eines Bodenkörpers
- 22: Auftragen einer Isolierungsschicht
- 23: Anordnen eines Isolierungskörpers
- 24: Aufbringen eines Induktionselements
- 25: Aushärten einer Isolierungsschicht oder eines Isolierungskörpers.
- 26: Ausbilden einer Abdeckung
- 27: Befestigen einer Abdeckung

## Patentansprüche

1. Küchengeschirr (1)
mit einem Bodenkörper (12) mit einer Bodenfläche (13), und
mit wenigstens einem Induktionselement (15), welches ausgebildet ist, wenigstens mittels induktiver Kopplung elektrische Energie zu erhalten,
wobei auf der Bodenfläche (13) eine Isolierungsschicht (14) aufgetragen ist oder ein Isolierungskörper (16) angeordnet ist,
und auf der Isolierungsschicht (14) oder auf dem Isolierungskörper (16) das Induktionselement (15) aufgebracht ist, wobei mittels der Isolierungsschicht (14) oder dem Isolierungskörper (16) das Induktionselement (15) gegenüber der Bodenfläche (13) des Bodenkörpers (12) elektrisch isoliert ist,
**dadurch gekennzeichnet, dass**
die Isolierungsschicht (14) urformend oder auflegend, insbesondere durch eine Drucktechnik, aufgetragen ist
und/oder
der Isolierungskörper (16) urformend oder auflegend angeordnet ist und/oder
das Induktionselement (15) urformend oder auflegend, insbesondere durch eine Drucktechnik, aufgebracht ist.

2. Küchengeschirr (1) nach Anspruch 1, **dadurch gekennzeichnet, dass**
eine Isolierungsschicht (14) flächig auf die Bodenfläche (13) des Bodenkörpers (12) aufgetragen ist und das Induktionselement (15) auf der Isolierungsschicht (14) aufgebracht ist, wobei das Induktionselement (15) gegenüber der Bodenfläche (13) des Bodenkörpers (12) flächig elektrisch isoliert ist.

3. Küchengeschirr (1) nach einem der vorangehenden Ansprüche, **dadurch gekennzeichnet, dass**
der Isolierungskörper (16) als Folie ausgebildet ist.

4. Küchengeschirr (1) nach einem der vorangehenden Ansprüche, wobei
auf dem Induktionselement (15) eine Abdeckung (19) ausgebildet ist, welches aus einem elektrisch nichtleitendem Material besteht, wobei das Material vorzugsweise ausgewählt ist aus einer Gruppe umfassend Silikon, Keramik, Kunststoff oder eine Kombination daraus.

5. Küchengeschirr (1) nach dem vorangehenden Anspruch, wobei
die Abdeckung (19) über die gesamte Bodenfläche (13) oder zumindest über 70 Prozent der Bodenfläche erstreckt ist.

6. Küchengeschirr (1) nach einem der vorangehenden Ansprüche, **dadurch gekennzeichnet, dass**
der Isolierungskörper (16) der Bodenfläche (13) des Bodenkörpers (12) zugewandt wenigstens ein Sensorelement (17) aufweist.

7. Küchengeschirr (1) nach dem vorangehenden Anspruch, **dadurch gekennzeichnet, dass**
das Sensorelement (17) ein Temperatursensor (17) ist, welcher zumindest abschnittsweise in berührendem Kontakt mit der Bodenfläche (13) des Bodenkörpers (12) steht.

8. Küchengeschirr (1) nach einem der vorangehenden Ansprüche, **dadurch gekennzeichnet, dass**
der Isolierungskörper (16) einen ferromagnetischen Körper (18) aufweist, welcher vorzugsweise in oder an dem Isolierungskörper (16) dem Induktionselement (15) zugewandt angeordnet ist.

9. Küchengeschirr (1) nach einem der vorangehenden Ansprüche, **dadurch gekennzeichnet, dass**
wenigstens zwei Induktionselemente (15) vorgesehen und durch den Isolierungskörper (16) zueinander elektrisch isoliert sind,
wobei die beiden Induktionselemente (15) vorzugsweise in der Höhe (Z) übereinander angeordnet sind.

10. Küchengeschirr (1) nach einem der vorangehenden Ansprüche, **dadurch gekennzeichnet, dass**
das Induktionselement (15) als Induktionsspule (15) ausgebildet ist.

11. Küchengeschirr (1) nach dem vorangehenden Anspruch, **dadurch gekennzeichnet, dass**
die Induktionsspule (15) konzentrisch zu einem Mittelpunkt der Bodenfläche (13) des Bodenkörpers (12) ausgebildet und angeordnet ist.

12. Verfahren (20) zur Herstellung eines Küchengeschirrs (1), aufweisend die folgenden Schritte:
- Bereitstellen (21) eines Bodenkörpers (12) des Küchengeschirrs (1), wobei der Bodenkörper (12) eine Bodenfläche (13) aufweist;
- Auftragen (22) einer Isolierungsschicht (14) auf die Bodenfläche (13) oder Anordnen eines Isolierungskörpers (16) auf der Bodenfläche (13); und
- Aufbringen (24) eines Induktionselements (15) auf die Isolierungsschicht (14) oder auf den Isolierungskörper (16), wobei das Induktionselement (15) ausgebildet ist, wenigstens mittels induktiver Kopplung elektrische Energie zu erhalten,
**dadurch gekennzeichnet, dass**
das Auftragen (22) einer Isolierungsschicht (14) urformend oder auflegend, insbesondere mittels einer Drucktechnik, erfolgt
und/oder
das Anordnen (23) des Isolierungskörpers (16) urformend oder auflegend erfolgt
und/oder
das Aufbringen (24) eines Induktionselements (15) urformend oder auflegend, insbesondere mittels einer Drucktechnik, erfolgt.

13. Verfahren (20) zur Herstellung eines Küchengeschirrs (1) nach dem vorangehenden Anspruch, wobei nach dem Schritt des Auftragens (22) der Isolierungsschicht (14) ein
- Aushärten (25) der Isolierungsschicht (14) oder des Isolierungskörpers (16).

14. Verfahren (20) zur Herstellung eines Küchengeschirrs (1) nach dem vorangehenden Anspruch, wobei der Schritt des Aushärtens (25) nach dem Schritt des Aufbringens (24) des Induktionselements (15) erfolgt.

15. Verfahren (20) zur Herstellung eines Küchengeschirrs (1) nach einem der vorangehenden Ansprüche 12 bis 14, wobei nach dem Schritt des Auftragens (22) der Isolierungsschicht (14) oder nach dem Schritt des Anordnens (23) des Isolierungskörpers (16) ein
- Ausbilden (26) einer Abdeckung (19) an der Bodenfläche (13) oder ein Befestigen (27) einer Abdeckung (19) an der Bodenfläche (13) erfolgt.

16. Küchengeschirrerzeugnis als ein Küchengeschirr (1) mit einem Bodenkörper (12)
**dadurch gekennzeichnet, dass**
das Küchengeschirrerzeugnis durch das Verfahren nach einem der vorangehenden Ansprüche 12 bis 15 hergestellt ist.
